# FASCICULE DE BREVET EUROPEEN

(11) **EP 1 610 404 B1**
(45) Date de publication et mention de la délivrance du brevet: **10.10.2012**
(21) Numéro de dépôt: 05291323.3
(22) Date de dépôt: 21.06.2005
(51) Int. Cl.: H01M 4/583, H01M 4/58

(54) **Générateur électrochimique à cathode en aérogel de carbone**
Elektrochemischer Generator mit einer Aerogel-Kohlenstoff Kathode
Electrochemical generator with an aerogel-carbone cathode

(30) Priorité: 25.06.2004 FR 0406998
(43) Date de publication de la demande: 28.12.2005
(73) Titulaire: SAFT, 93170 Bagnolet (FR)
(72) Inventeur: Simon, Bernard, 33320 Le Taillan Medoc (FR); Hilaire, Michel, 33160 Saint-Medard-en-Jalles (FR); Cousseau, Jean-Francois, 86000 Poitiers (FR)
(74) Mandataire: Hirsch & Associés

(56) Documents cités:
- US-A- 5 358 802
- US-A- 5 636 437
- US-A1- 2002 084 188
- US-A1- 2003 108 785
- US-B1- 6 555 945

## Description

### DOMAINE TECHNIQUE

L'invention a pour objet un générateur électrochimique à cathode en aérogel de carbone. Un tel générateur comprend, dans la cathode, un composé électrochimiquement actif qui est liquide.

### ETAT DE LA TECHNIQUE

Les générateurs électrochimiques dits à cathode liquide, du type Li/SOCl₂ sont connus, et comprennent de façon classique une anode de lithium et une cathode en carbone, le liquide positif actif se trouvant dans la porosité de la cathode. Les cathodes classiques comprennent des grains de noir de carbone qui sont comprimés ensemble, en présence d'un liant, classiquement du PTFE. Ces générateurs présentent cependant un problème lors du stockage, notamment à haute température, à savoir la formation à la surface de l'anode de lithium d'une couche de passivation qui devient résistante au passage des ions lithium lors de la décharge.

Cette passivation entraîne un pic de polarisation transitoire, aussi appelé "voltage delay", qui se manifeste par une chute transitoire de tension au début de la décharge.

On recherche donc des générateurs ne présentant pas ce problème de pic de polarisation transitoire.

US-P-6503655, US-P-5601938 et US-P-5429886 décrivent des électrodes poreuses à diffusion de gaz, pour une application aux piles à combustible, ces électrodes comprenant un aérogel de carbone. L'aérogel de carbone est indiqué comme présentant une bonne conductivité électrique.

JP-9328308 décrit une électrode de condensateur comprenant un aérogel de carbone, afin d'augmenter la vitesse de charge et de décharge du condensateur.

US-P-5393619 décrit un séparateur conducteur électronique placé entre deux électrodes adjacentes de deux générateurs série afin de réduire l'encombrement du module ainsi créé, ces électrodes pouvant être en aérogel de carbone.

Aucun des documents ci-dessus n'a trait aux générateurs électrochimiques à cathode liquide, ni au problème de la passivation de l'anode de lithium.

Aucun des documents ci-dessus n'enseigne ni ne décrit le générateur selon l'invention.

### RESUME DE L'INVENTION

L'invention fournit donc un générateur électrochimique à matériau positif liquide comprenant une anode métallique et une cathode à base de carbone, caractérisé en ce que la cathode comprend un aérogel de carbone.

### BREVE DESCRIPTION DES FIGURES

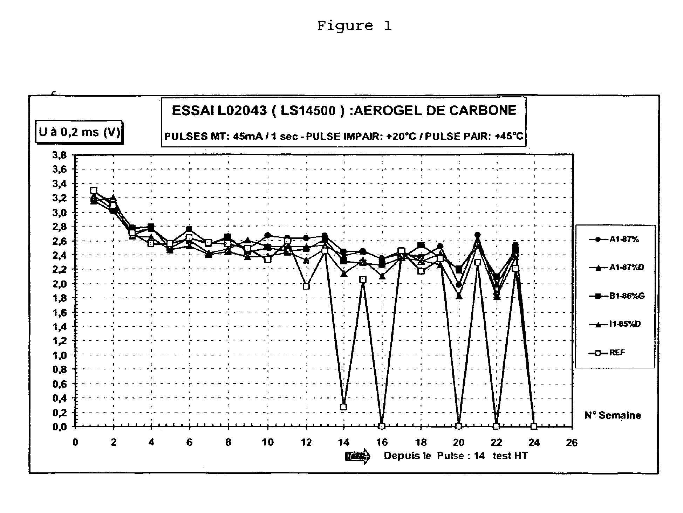

- La figure 1 représente les valeurs de tension mesurées aux bornes des générateurs cylindriques "14500" (de format AA) fabriqués selon différents modes de réalisation de l'invention, 0,2 ms après le début d'une décharge d'une durée d'une seconde sous un courant de C/50 à la température de l'enceinte thermostatée. La figure 1 représente également, à titre de comparaison, les valeurs de mesure de tension aux bornes d'un générateur de référence équipé d'une cathode, constituée selon l'état de la technique, de grains de noir de carbone compressés, dans les mêmes conditions de décharge. Les deux types de générateurs ont été préalablement stockés ensemble dans une enceinte thermostatée, alternativement, une semaine à 20°C et la semaine suivante à 45°C. A partir de la 14^{ème} semaine, les températures de stockage sont 20°C et 65°C au lieu de 20°C et 45°C. Le pulse de courant de décharge est appliqué à la fin de la semaine de stockage à la température de stockage.

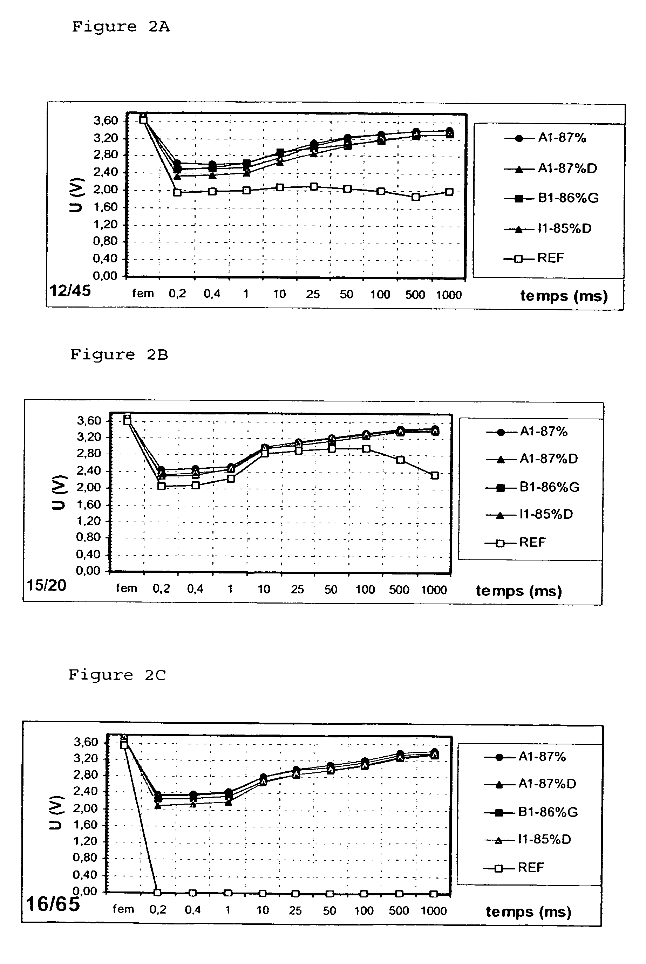

- La figure 2A représente les valeurs de tension mesurées aux bornes des générateurs fabriqués selon différents modes de réalisation de l'invention ainsi qu'aux bornes du générateur de référence, au cours de la décharge test, réalisée en fin de 12^{ème} semaine, après une semaine de stockage à 45°C.
- La figure 2B représente les valeurs de tension mesurées aux bornes des générateurs fabriqués selon différents modes de réalisation de l'invention ainsi qu'aux bornes du générateur de référence, au cours de la décharge test, réalisée en fin de 15^{ème} semaine, après une semaine de stockage à 20°C.
- La figure 2C représente les valeurs de tension mesurées aux bornes des générateurs fabriqués selon différents modes de réalisation de l'invention ainsi qu'aux bornes du générateur de référence, au cours de la décharge test, réalisée en fin de 16^{ème} semaine, après une semaine de stockage à 65°C.

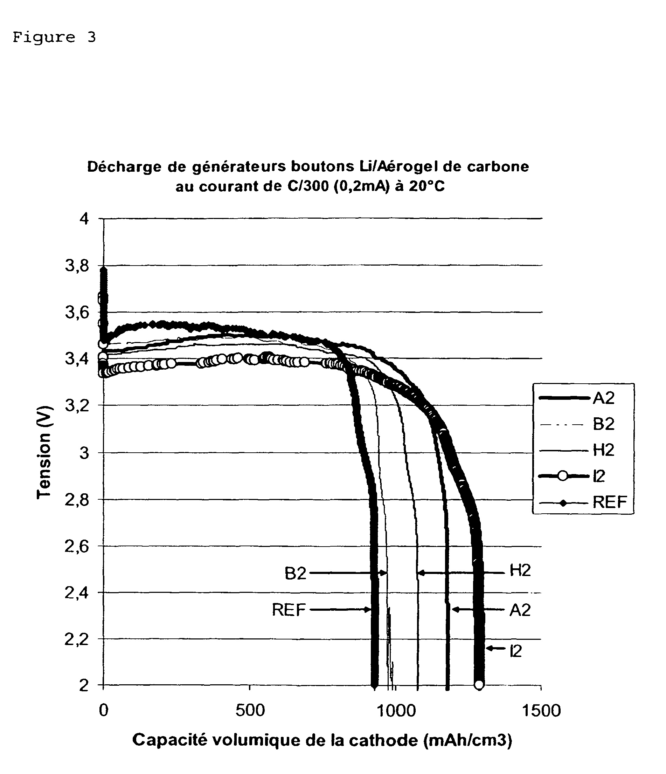

- La figure 3 représente les valeurs de tension mesurées aux bornes d'un générateur de format bouton fabriqué selon différents modes de réalisation de l'invention au cours d'une décharge au régime de C/300 à 20°C. La figure 3 représente également, à titre de comparaison, les valeurs de mesure de tension aux bornes d'un générateur de référence de même format, équipé d'une cathode constituée selon l'état de la technique, de grains de noir de carbone compressés, dans les mêmes conditions de décharge.

### EXPOSE DETAILLE DE MODES DE REALISATION DE L'INVENTION

Le générateur selon l'invention comprend de façon classique un boîtier métallique extérieur. Le générateur selon l'invention peut être de format cylindrique, prismatique ou de format bouton. Dans le cas d'un générateur de format cylindrique, le montage des électrodes est de type bobineau. Selon ce type de montage, une anode cylindrique est insérée dans ce boîtier sur la périphérie. Le métal de l'anode est tout métal approprié dans l'art des générateurs à cathode liquide, et on peut citer les métaux alcalins et alcalinoterreux, et leurs alliages. On préférera le lithium. Un séparateur est disposé sur l'anode, il est résistant à l'électrolyte, par exemple en fibres de verre. Une cathode cylindrique est insérée dans l'espace restant. Un couvercle métallique est soudé à la partie supérieure du boîtier.

L'électrolyte est introduit dans le trou aménagé dans le couvercle métallique. L'électrolyte comprend classiquement un sel qui peut être choisi, par exemple, parmi les chlorate, perchlorate, trihalogénoacétate, halogénure, (boro)hydrure, hexafluoroarsénate, hexafluorophosphate, (tétra)chloroaluminate, (tétra)fluoroborate, (tétra)bromochloroaluminate, (tétra)bromoborate tetrachlorogallate, closoborate et leurs mélanges. On préférera les sels de tétrachloroaluminate, tétrachlorogallate pour le chlorure de thionyl. Ce sel est en général un sel métallique (en général celui de l'anode), mais on peut aussi utiliser des sels d'ammonium, en particulier de tétraalkylammonium. Le sel préféré est un sel de lithium. La concentration en sel est comprise entre 0.1 M et 2 M, de préférence entre 0.5 M et 1.5 M.

Le solvant de l'électrolyte est constitué par l'oxydant liquide ou gazeux, choisi par exemple dans le groupe consistant en SOCl₂, SO₂, SO₂Cl₂, S₂Cl₂, SCl₂, POCl₃, PSCl₃ VOCl₃, VOBr₂, SeOCl₂, CrO₂Cl₂, et leurs mélanges. Dans le cas de matériau positif sous forme de gaz, on utilise ces matériaux dissous classiquement dans des co-solvants, tels que nitriles aromatiques et aliphatiques, DMSO, amides aliphatiques, esters aliphatiques ou aromatiques, carbonates cycliques ou linéaires, butyrolactone, amines aliphatiques ou aromatiques, ces amines étant primaires ou secondaires ou tertiaires, et leurs mélanges. On préférera les nitriles aliphatiques comme l'acétonitrile. La concentration en matériau positif dissous correspond en général à la saturation, et est comprise en général entre 60 et 90% en poids de l'électrolyte.

Le matériau positif préféré est le SOCl₂ ou SO₂ ou encore SO₂Cl₂, les deux premiers et en particulier le tout premier étant très préféré.

La cathode en carbone est la partie qui caractérise le générateur selon l'invention. Cette cathode comprend un aérogel de carbone. Ce terme de "aérogel" couvre aussi les termes voisins de "xérogel" et "cryogel" et "aérogel-xérogel" ou "ambigel".

Les aérogels de carbone sont connus. Ils sont par exemple obtenus par pyrolyse d'un gel de polymère réticulé notamment du type résine phénol-aldéhyde (en particulier résorcinol-formaldéhyde). Plus spécifiquement, on peut citer les étapes suivantes :
- On prépare une solution aqueuse de sol d'un mélange de polymère ou précurseur de polymère et d'un agent réticulant notamment du type résine phénol-aldéhyde (en particulier résorcinol-formaldéhyde).
- On procède à la gélification (réticulation) par addition d'une solution basique agissant comme catalyseur. Les tailles des pores sont notamment gouvernées par les teneurs massiques respectives en sols et la teneur en catalyseur.
- Les gels sont alors par exemple déposés sur une plaque ou dans un moule à la forme désirée.
- On procède avantageusement à un échange de solvant pour remplacer l'eau éventuellement encore présente, par un solvant organique type acétone.

On procède avantageusement à un séchage à l'aide de dioxyde de carbone sub- ou supercritique. (Selon le procédé de séchage, le gel prend le nom d'aérogel (séchage supercritique), xérogel (séchage par évaporation), cryogel (séchage par lyophilisation)).
- On procède à une pyrolyse à une température par exemple comprise entre 800 et 1200°C sous atmosphère inerte.

La cathode selon l'invention présente en général une porosité totale comprise entre 70 et 95% en volume. Les pores dits pores de transport correspondant à une macro et mésoporosité, représentent en général une porosité de 70 à 90% du volume total. On rappelle que le terme de mésoporosité correspond à un diamètre de pores de 2 à 50 nm, le terme de macroporosité correspond à un diamètre de pores supérieur à 50nm. La macro-mesoporosité correspond à l'espace inter particules. La porosité totale et la macro-mésoporosité sont mesurées par pycnométrie Hélium en prenant respectivement une densité de matériau (carbone amorphe) de 2 et une densité des particules de carbone élémentaires évaluée par SAXS (small angle X-ray scattering), de 1.4.

La surface spécifique des macro-mésopores est mesurée par la technique d'adsorption d'azote (t-plot) et la taille moyenne des pores est calculée d'après cette valeur en supposant des particules élémentaires sphériques monodispersées. Selon un mode de réalisation, la surface spécifique des macro-mésopores est comprise entre 30 et 100 m²/g. Une telle surface spécifique permet d'obtenir une tension moyenne en décharge à C/300 qui est élevée (par exemple supérieure à 3,4V pour un générateur LiSOCl₂).

La cathode selon l'invention offre notamment, par rapport aux cathodes classiques obtenues par compression de poudres, une distribution poreuse améliorée et une meilleure conductivité électronique (structure monolithique).

L'invention offre encore d'autres avantages que celui de réduire le pic de polarisation transitoire. En effet, la nouvelle cathode peut présenter d'autres avantages tels que une meilleure tenue mécanique et/ou une meilleure capacité massique et/ou une meilleure capacité volumique et/ou une plus grande facilité de fabrication.

Le gel polymérique peut être synthétisé dans un moule cylindrique, ce qui fait que l'aérogel de carbone final est directement aux dimensions requises pour un élément cylindrique de type bobineau. La collection de courant vers l'extérieur se fait par l'ajout d'un fil rigide métallique directement durant l'étape de gélification (G pour gelled) ou par forage après pyrolyse (D pour drilled).

Par ailleurs, le générateur selon l'invention offre aussi l'avantage de présenter une capacité supérieure par rapport aux générateurs à cathode classique en grains de noir de carbone.

La température à laquelle on peut utiliser le générateur selon l'invention peut aller de -50°C à +90°C, en particulier de -30°C à +70°C. Le générateur primaire selon l'invention trouve à s'appliquer dans tous les domaines classiques, tels que piles pour appareils nomades ou fixes.

Les exemples suivants illustrent l'invention sans la limiter.

### EXEMPLES

On a fabriqué des générateurs Li/SOCl₂ de deux formats différents: un format cylindrique AA dit "14500" (14 mm de diamètre pour 50 mm de hauteur) et un format bouton. Le sel de l'électrolyte est LiAlCl₄ à une concentration de 1.35 M. Les cathodes utilisées pour les essais sur générateurs de format cylindrique "14500" sont les suivantes : toutes les cathodes hors référence sont des aérogels de carbone obtenus par pyrolyse d'aérogels de résines résorcinol formaldéhyde. Le gel aqueux de polymère est obtenu par polycondensation de résorcinol, formaldéhyde, avec catalyseur Na₂CO₃. Le taux de catalyseur détermine la distribution de taille de pore dans les différents échantillons. L'eau est ensuite échangée par l'acétone par trempage dans un bain durant trois jours. Les échantillons sont ensuite séchés par CO₂ supercritique durant 3 jours à 50°C. La pyrolyse est effectuée à 1050°C avec 2h de montée en température et 3h de maintien.
- Cathode de référence REF: classique, obtenue par compression jusqu'à une porosité totale de 85% de particules de noir de carbone de tailles allant de 30 à 50 nm avec un liant à base de PTFE.
- Cathode A1:
   porosité totale : 88.5% ;
   macro-mésoporosité : 82%;diamètre moyen en volume des macro-mésopores : 535 nm.
- Cathode A1-D: même que cathode A1, "drilled".
- Cathode B1-G:
   porosité totale : 86% ;
   macro-mésoporosité : 80% ;
   surface spécifique des macro-mésopores : 81 m²/g ;
   diamètre moyen en volume des macro-mésopores : 210 nm
- Cathode I1-D:
   porosité totale : 84.5% ;
   macro-mésoporosité : 78% ;
   surface spécifique des macro-mésopores : 11 m²/g ; diamètre moyen en volume des macro-mésopores : 1400 nm

Les cathodes utilisées pour les essais sur générateurs de format bouton sont (hormis la référence qui est obtenue par laminage des grains de l'électrode de référence précédente) des disques obtenus en tranchant les cylindres d'aérogels et sont les suivantes :
- Cathode de référence REF:
   classique, obtenue par compression jusqu'à une porosité totale de 85% de particules de noir de carbone de taille allant de 30 à 50nm, avec un liant à base de PTFE.
- Cathode A2:
   porosité totale : 84.9% ;
   macro-mésoporosité : 78.4 ;
   surface spécifique des macro-mésopores : 36 m²/g ;
   diamètre moyen en volume des macro-mésopores : 535 nm
- Cathode B2:
   porosité totale : 83.1% ;
   macro-mésoporosité : 75.9% ;
   surface spécifique des macro-mésopores : 78 m²/g ;
   diamètre moyen en volume des macro-mésopores : 210 nm
- Cathode H2:
   porosité totale : 79.5% ;
   macro-mésoporosité : 70.7% ;
   surface spécifique des macro-mésopores : 29 m²/g ;
   diamètre moyen en volume des macro-mésopores : 400 nm
- Cathode I2:
   porosité totale : 83.2% ;
   macro-mésoporosité : 75.9% ;
   surface spécifique des macro-mésopores : 11 m²/g ;
   diamètre moyen en volume des macro-mésopores : 1400 nm

### Exemple 1.

On a fabriqué quatre générateurs cylindriques de format AA de dénomination commerciale "LS14500P" de type bobineau à cathode en aérogel de carbone, auxquels on a fait subir un test de cyclage thermique. Il s'agit des générateurs à cathodes A1, A1-D, B1-G et I1-D fabriquées selon le mode opératoire décrit précédemment. Un générateur de référence REF LS14500P a été également assemblé.

Les cinq générateurs ont été chargés puis stockés dans une enceinte thermostatée à 20°C pendant une semaine. Ils ont ensuite été déchargés pendant une seconde à 20°C. Les valeurs transitoires de tension à 0,2 ms après le début de la décharge ont été mesurées. Les générateurs ont été replacés dans l'enceinte, stockés à 45°C pendant une semaine, puis déchargés à 45°C pendant une seconde sous le même courant que celui de la première décharge. Les valeurs transitoires de tension à 0,2 ms après le début de la décharge ont été mesurées. A partir de la 14^{ème} semaine, la température de stockage a été portée à 65°C au lieu de 45°C. La répétition des opérations consécutives de stockage à différentes températures constitue un cyclage thermique des générateurs entrecoupé par des phases de décharge-test Les résultats de la figure 1 montrent à partir de la 14^{ème} semaine que les tensions des générateurs selon l'invention sont nettement supérieures à la tension du générateur de référence.

On a aussi mesuré les temps de réponse à différentes températures, 20°C, 45°C et 65°C. Les résultats sont donnés aux figures 2A à 2C. Ces résultats montrent que durant la phase transitoire de stabilisation de la tension :
- les temps de réponse des générateurs selon l'invention sont inférieurs au temps de réponse du générateur de référence.
- la différence entre la tension des générateurs selon l'invention et la tension de la batterie de référence augmente avec la température.

Ces résultats montrent clairement l'intérêt d'utiliser une cathode en aérogel de carbone pour réduire le phénomène de "voltage delay".

### Exemple 2.

On a fabriqué des générateurs de type bouton et on a testé divers matériaux de cathode (cathodes A2, B2, H2, I2 et REF). On a mis en oeuvre un test de décharge à C/300, à 20°C. Les courbes de décharge sont représentées figure 3. Les résultats montrent pour les générateurs avec la cathode selon l'invention une capacité volumique supérieure d'environ 20%. Les résultats avec la cathode I2 qui a la surface spécifique des macro-mésopores la plus basse montrent le gain apporté par le choix des valeurs pour la surface spécifique.

## Revendications

1. Générateur électrochimique à matériau positif liquide comprenant une anode métallique et une cathode à base de carbone, **caractérisé en ce que** la cathode comprend un aérogel de carbone.

2. Générateur selon la revendication 1, dans lequel l'aérogel de carbone de la cathode présente une porosité totale représentant de 70 à 95% en volume.

3. Générateur selon la revendication 1 ou 2, dans lequel l'aérogel de carbone de la cathode présente une macroporosité et une mésoporosité représentant ensemble de 70 à 90% en volume par rapport au volume total de l'électrode.

4. Générateur selon la revendication 1, 2 ou 3, dans lequel la surface spécifique des pores de taille supérieure à 2nm de la cathode est comprise entre 30 et 100 m²/g.

5. Générateur selon l'une des revendications 1 à 4, dans lequel l'anode est une anode de lithium.

6. Générateur selon l'une des revendications 1 à 5, dans lequel le matériau positif liquide est SOCl2.

7. Générateur selon l'une des revendications 1 à 5, dans lequel le matériau positif est SO₂ dissous.

## Claims

1. An electrochemical cell having liquid positive material and comprising a metal anode and a carbon-based cathode, the cell being **characterized in that** the cathode comprises a carbon aerogel.

2. The cell according to claim 1, in which the carbon aerogel of the cathode presents total porosity representing 70% to 95% by volume.

3. The cell according to claim 1 or claim 2, in which the carbon aerogel of the cathode presents macro-porosity and mesoporosity together representing 70% to 90% by volume compared with the total volume of the electrode.

4. The cell according to claim 1, 2, or 3, in which the specific surface 2 area of the pores of a size greater than 2 nm in the cathode lies in the range 30 m /g to 100 m²/g.

5. The cell according to any one of claims 1 to 4, in which the anode is a lithium anode.

6. The cell according to any one of claims 1 to 5, in which the liquid positive material is SOCl₂.

7. The cell according to any one of claims 1 to 5, in which the positive material is dissolved SO₂.

## Patentansprüche

1. Elektrochemisches Element aus flüssigem positivem Material, umfassend eine Metallanode und eine Kathode auf der Basis von Kohlenstoff, **dadurch gekennzeichnet, dass** die Kathode ein Kohlenstoffaerogel umfasst.

2. Element nach Anspruch 1, wobei das Kohlenstoffaerogel der Kathode eine Gesamtporosität aufweist, die 70 bis 95 Vol.-% darstellt.

3. Element nach Anspruch 1 oder 2, wobei das Kohlenstoffaerogel der Kathode eine Makroporosität und eine Mesoporosität aufweist, die, bezogen auf das Gesamtvolumen der Elektrode, zusammen 70 bis 90 Vol.-% darstellen.

4. Element nach Anspruch 1, 2 oder 3, wobei die spezifische Oberfläche der Poren mit einer Größe von mehr als 2 nm der Kathode im Bereich zwischen 30 und 100 m²/g liegt.

5. Element nach einem der Ansprüche 1 bis 4, wobei die Anode eine Lithiumanode ist.

6. Element nach einem der Ansprüche 1 bis 5, wobei das flüssige positive Material SOCl₂ ist.

7. Element nach einem der Ansprüche 1 bis 5, wobei das positive Material gelöstes SO₂ ist.
